# EUROPEAN PATENT SPECIFICATION

(11) **EP 2 600 568 B1**
(45) Date of publication and mention of the grant of the patent: **14.05.2014**
(21) Application number: 12192583.8
(22) Date of filing: 14.11.2012
(51) Int. Cl.: H04L 12/46, H04L 12/741

(54) **Relay server and relay communication system**
Relaisserver und Relaiskommunikationssystem
Serveur de relais et système de communication de relais

(30) Priority: 30.11.2011 JP 2011263034
(43) Date of publication of application: 05.06.2013
(73) Proprietor: Murata Machinery, Ltd., Minami-ku Kyoto-shi Kyoto 601-8326 (JP)
(72) Inventor: Tanimoto, Yoshifumi, Kyoto-shi, Kyoto 612-8686 (JP)
(74) Representative: Stöckeler, Ferdinand

(56) References cited:
- WO-A1-01/78330
- US-A1- 2003 112 808
- US-A1- 2006 153 192
- US-A1- 2008 013 554
- US-B1- 7 809 806

## Description

### BACKGROUND OF THE INVENTION

### 1. Field of the Invention

The present invention mainly relates to a relay server that enables communication between devices connected to different LANs (Local Area Networks).

### 2. Description of the Related Art

Conventionally, there is known a communication technology called a Virtual Private Network (VPN) in which LANs installed in physically distant positions conduct communication with each other. For example, in Japanese Unexamined Patent Publication No. 2010-268312, a relay server and a communication terminal are connected to each of a plurality of LANs installed at locations that are physically distant from each other. Using the VPN, the communication terminal can transmit a packet to the communication terminal connected to another LAN. Specifically, the packet transmitted by the communication terminal is initially sent to the relay server in the same LAN. The relay server transmits (transfers) the packet to the relay server in the same LAN as the communication terminal of the destination via the Internet. The relay server that receives the packet transmits (transfers) the packet to the communication terminal of the destination.

Using the VPN, another remotely-located LAN can be used as if it is a directly-connected network.

In the case where the communication is conducted using the VPN as in Japanese Unexamined Patent Publication No. 2010-268312, generally, a device that conducts communication is previously registered, and all of the registered devices can conduct communication with one another after the VPN is constructed.

However, from the viewpoint of security, it may be undesirable that the communication between the devices is always permitted. For example, considered is a case where the VPN is constructed by a company A that provides a maintenance service and a company B that uses the maintenance service. A maintenance target device owned by the company B and a monitoring device installed by the company A are installed in the company B. The monitoring device is installed in order to monitor whether a failure is generated in the maintenance target device. In this case, it is necessary that the device installed in the company A be able to always conduct communication with the monitoring device. On the other hand, it is undesirable from the viewpoint of security that the device installed in the company A can conduct communication with the maintenance target device even if it is unnecessary.

Accordingly, in the conventional configuration, a setting be performed after the construction of the VPN such that the device installed in the company A is not able to access the maintenance target device. However, the necessity to perform the setting each time the VPN is constructed places a large burden on the user. Additionally, the user may possibly forget the setting. In this case, security vulnerability is generated.

US 2003/112808 A1 describes a method and means for automatically detecting, for any site or LAN of an organizational net, all the external subnets within the net with which it, or any subnet within it, actively communicate through a WAN and for compiling a configuration- or mapping table that lists address pairs of such detected subnets as corresponding active tunnels. The process, carried out by a special agent, includes intercepting data packets flowing in- or out of the LAN and extracting from each the local and remote subnet addresses. Further the table is to indicate, for each such tunnel, an IP address associated with the LAN to which the remote subnet is connected. Such an address is obtained by sending in inquiry message to the remote subnet, which is intercepted by the corresponding remote agent, and having the remote agent send a response message to the originating agent, from which the remote agent's address is extracted. Other data may also be exchanged between the agents in the net, including data in the compiled tables. The data in the tables subsequently serve to classify data traffic as to the tunnel through which each data packet flows and as to services to be applied to these data.

US 2008/013554 A1 describes a gateway that controls electric equipment connected to a LAN through a WAN. The gateway has an address mapping table that LAN address corresponds to WAN address, network layer unit for converting a source address and a destination address in a network layer into a WAN address for a packet received from the LAN, and an application layer unit for converting an access address in the application layer into the WAN address for the packet.

US 2006/153192 A1 describes a method, a system, and a computer program product for quickly and automatically blocking a plurality of computer systems in response to a detection of a widespread vulnerability or software infection. The method comprises: providing a list of Internet Protocol (IP) addresses corresponding to a plurality of devices to be blocked in a network; and for each IP address in the list: determining a router in the network connected to the IP address; determining a layer-2 Media Access Control (MAC) address associated with the IP address; and applying a CAM filter to a core switch associated with the router to block communication from the device corresponding to the IP address, at the core switch; wherein the blocking of the plurality of devices occurs automatically in response to the provision of the list of IP addresses.

### BRIEF SUMMARY OF THE INVENTION

It is an object of the present invention to provide a relay server that can construct a relay communication system in which, when the registered devices conduct relay communication with each other, the relay communication can be started while only the selected devices can conduct communication with each other.

This object is achieved by a relay server according to claim 1.

According to a first aspect of the present invention, a relay server having the following configuration is provided. Specifically, the relay server includes an address filter information storage unit, a communication setting information storage unit, and a controller. The address filter information storage unit stores a first routing target address and a second routing target address, the first routing target address being an address of a first routing target device, to which a packet is transferred (by a relay server), located in a first LAN, the second routing target address being an address of a second routing target device to which a second relay server located in a second LAN transfers a packet. The communication setting information storage unit stores an initial communication setting and a current communication setting, the initial communication setting indicating an initial setting of permission/prohibition of relay communication in which the first routing target address is addressed, the current communication setting indicating a current setting. The controller extracts the first routing target address that is permitted in the initial communication setting to transmit the extracted first routing target address to the second relay server, and receives the second routing target address from the second relay server, to establish a routing session with the second relay server. The controller registers a content of the initial communication setting as the current communication setting. The controller transfers, when a packet addressed to the second routing target device is received from the first routing target device, the packet to the second relay server through the routing session. The controller transfers, when a packet addressed to the first routing target address is received from the routing session, the packet to the first routing target device of a destination.

Therefore, at a stage at which the communication is started, since the first routing target address to which the prohibition is set in the initial communication setting is not transmitted to another relay server, the communication in which the first routing target address is set to the destination is not conducted. Therefore, when it is undesirable from the viewpoint of security that the access to a certain first routing target device is always permitted, by setting the prohibition to the first routing target address in the initial communication setting, the communication can be started through the routing session while the access to the first routing target device is prohibited. Accordingly, the user is not required to manually change the setting after the start of the communication, so that the user can save the trouble. A man-made mistake such that the user forgets the setting is not generated, so that the security can be improved.

In the above relay server, when the current communication setting is switched after the routing session is established, a post-switching content is preferably transmitted to the second relay server.

Therefore, the second relay server is notified that the permission/prohibition of the communication is switched, so that the relay communication can be conducted while the changed content is reflected.

In the above relay server, the communication setting information storage unit can preferably store different initial communication settings with respect to each relay server.

Therefore, the user who uses a certain relay server can set different initial communication settings with respect to each relay server based on a relationship with a user of another relay server. Accordingly, the relay communication system that flexibly deals with various situations can be constructed.

In the above relay server, when a group in which relay servers belonging to an identical group including a plurality of relay servers establish a routing session with each other to conduct communication is referred to as a communication group, the communication setting information storage unit can preferably store different initial communication settings with respect to each communication group.

Therefore, the user who uses the relay communication system can set different initial communication settings with respect to each communication group in consideration of a relationship with the other side belonging to the same communication group. Accordingly, the relay communication system that flexibly deals with various situations can be constructed.

In the above relay server, even when the current communication setting is changed after the routing session is established, the controller preferably returns the current communication setting to the initial communication setting when the routing session is established again.

Therefore, the unintended setting of the permission is prevented in the first routing target address in which the access is not usually accepted, so that the security can be improved.

According to a second aspect of the present invention, a relay server having the following configuration is provided. Specifically, the relay communication system includes a first relay server and a second relay server. The first relay server located in the first LAN includes an address filter information storage unit, a communication setting information storage unit, and a controller. The address filter information storage unit stores a first routing target address and a second routing target address, the first routing target address being an address of a first routing target device to which the first relay server located in the first LAN transfers a packet, the second routing target address being an address of a second routing target device to which the second relay server located in a second LAN transfers a packet. The communication setting information storage unit stores an initial communication setting and a current communication setting, the initial communication setting indicating an initial setting of permission/prohibition of relay communication in which the first routing target address is addressed, the current communication setting indicating a current setting. The controller of the first relay server extracts the first routing target address that is permitted in the initial communication setting to transmit the extracted first routing target address to the second relay server, and receives the second routing target address from the second relay server, to establish a routing session with the second relay server. The controller registers a content of the initial communication setting as the current communication setting. The controller transfers, when a packet addressed to the second routing target device is received from the first routing target device, the packet to the second relay server through the routing session. The controller transfers, when a packet addressed to the first routing target address is received from the routing session, the packet to the first routing target device of a destination.

Therefore, at the stage at which the communication is started, since the first routing target address to which the prohibition is set in the initial communication setting is not transmitted to another relay server, the communication in which the first routing target address is set to the destination is not conducted. Therefore, when it is undesirable from the viewpoint of security that the access to the first routing target device is always permitted, by setting the prohibition to the first routing target address in the initial communication setting, the communication can be started through the routing session while the access to the first routing target device is prohibited. Accordingly, the user is not required to manually change the setting after the start of the communication, so that the user can save the trouble. The man-made mistake such that the user forgets the setting is not generated, so that the security can be improved.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. 1 is an explanatory view illustrating an overall configuration of a relay communication system according to an embodiment of the present invention;
FIG. 2 is a functional block diagram of a relay server;
FIG. 3 is a view illustrating a content of relay group information;
FIG. 4 is a view illustrating a content of relay server information;
FIGS. 5A to 5C are views illustrating a content of client terminal information;
FIG. 6 is a view illustrating a content of VPN group information;
FIGS. 7A to 7C are views illustrating contents of address filter information and communication setting information, which are previously registered with respect to each relay server;
FIGS. 8A and 8B are views illustrating contents of the address filter information and the communication setting information, which are stored in a relay server 1 after VPN construction;
FIGS. 9A and 9B are views illustrating contents of the address filter information and the communication setting information, which are stored in a relay server 3 after the VPN construction;
FIG. 10 is a flowchart illustrating a setting previously performed to the relay server;
FIG. 11 is a flowchart illustrating processing of producing a VPN group;
FIG. 12 is a flowchart illustrating processing of constructing the VPN group;
FIG. 13 is a flowchart illustrating the processing of constructing the VPN;
FIG. 14 is a flowchart illustrating the processing of constructing the VPN;
FIGS. 15A and 15B are explanatory views illustrating routing control;
FIG. 16 is a flowchart illustrating processing when permission/prohibition of a current communication setting is switched; and
FIGS. 17A and 17B are views illustrating contents of address filter information and communication setting information according to a modification.

### DETAILED DESCRIPTION OF PREFERRED EMBODIMENTS

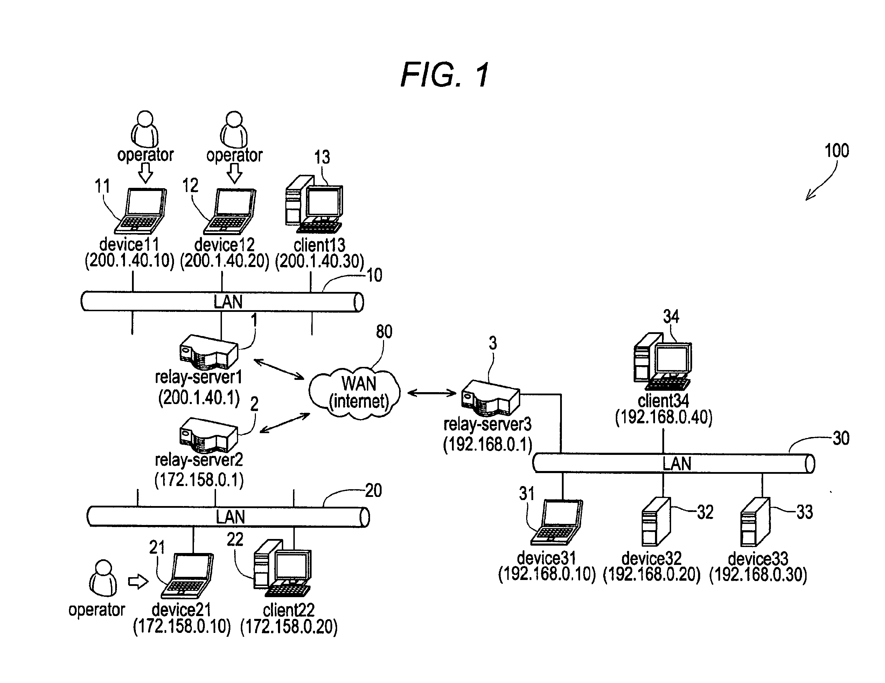

Hereinafter, an embodiment of the present invention will be described with reference to the drawings. An outline of a relay communication system 100 according to the present embodiment will be described with reference to FIG. 1. FIG. 1 is an explanatory view illustrating an overall configuration of the relay communication system 100 of the present embodiment.

As illustrated in FIG. 1, the relay communication system 100 is configured by a plurality of LANs 10, 20, and 30 connected to a Wide Area Network (WAN) 80. Each of the LANs 10, 20, and 30 is a relatively small network constructed at a restricted site. The LANs 10, 20, and 30 are disposed in positions that are physically distant from each other. In the present embodiment, the Internet is used as the WAN 80.

Each LAN will specifically be described below. As illustrated in FIG. 1, a relay server (second relay server) 1, operating PCs 11 and 12 serving as the second routing target device, and a client terminal 13 are connected to the LAN (second LAN) 10. A relay server 2, an operating PC 21, and a client terminal 22 are connected to the LAN 20. A relay server (first relay server) 3, target terminals 31, 32, and 33 serving as the first routing target device, and a client terminal 34 are connected to the LAN (first LAN) 30.

Because each of the relay servers 1, 2, and 3 is connected to not only the LANs 10, 20, and 30 but also the WAN 80, each of the relay servers 1, 2, and 3 can conduct communication with not only a device connected to the same LAN but also the relay servers disposed in other LANs. For example, the operating PCs 11, 12, and 21 are personal computers operated by operators. For example, the target terminals 31, 32, and 33 are personal computers, file servers, and the like. It is assumed that the operator operates the operating PC 11 or the like to make a request of predetermined data to the target terminal 31 and the like, and to update a storage content of the target terminal 31. For example, the client terminals 13, 22, and 34 are configured by personal computers. The client terminals 13, 22, and 34 can conduct communication with one another through the relay servers 1, 2, and 3 to which the client terminals 13, 22, and 34 belong.

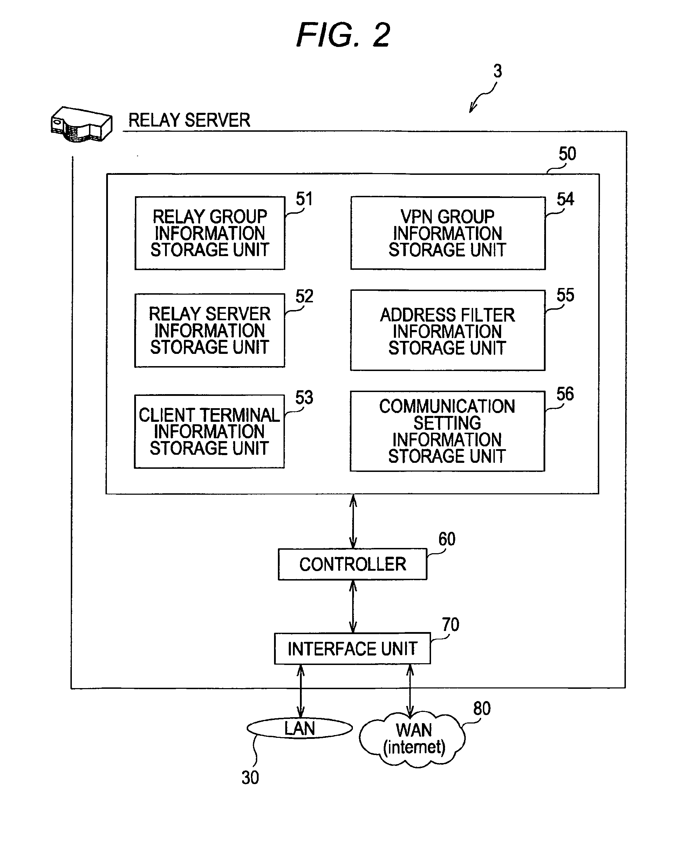

Next, detailed configurations of the relay servers 1, 2, and 3 will be described with reference to FIG. 2. FIG. 2 is a functional block diagram of the relay server 3. Since the relay server 3 has the substantially same configuration as the relay servers 1 and 2, the relay server 3 will mainly be described below.

As illustrated in FIG. 2, the relay server 3 includes a storage unit 50, a controller 60, and an interface unit 70.

The interface unit 70 conducts communication with the terminal in the LAN 10. The interface unit 70 also conducts communication with the WAN 80. The interface unit 70 performs appropriate processing to a packet received from the LAN 30 or the WAN 80, and outputs the packet to the controller 60.

For example, the controller 60 is a CPU having control and calculation functions. The controller 60 can perform various pieces of processing using a program read from the storage unit 50. The controller 60 can control various kinds of communication pursuant to protocols, such as TCP/IP, UDP, and SIP. Specifically, the controller 60 determines a destination of the received packet based on information indicated by the packet and information stored in the storage unit 50, and transmits the packet to the determined destination. The controller 60 can update a storage content of the storage unit 50 based on information received from another terminal.

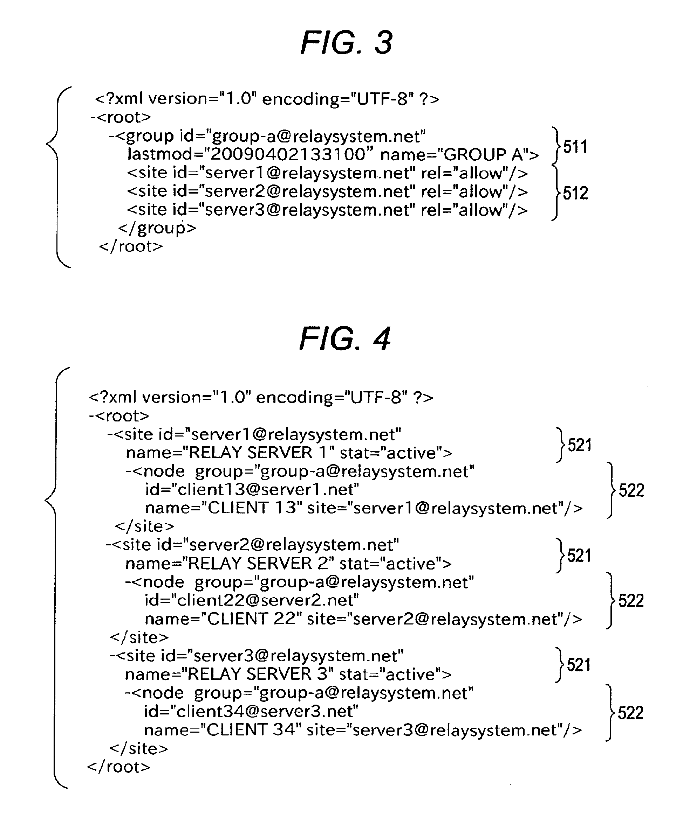

For example, the storage unit 50 is configured by a hard disk or a nonvolatile RAM, and various pieces of data can be stored in the storage unit 50. The storage unit 50 includes a relay group information storage unit 51, a relay server information storage unit 52, a client terminal information storage unit 53, a VPN group information storage unit 54, an address filter information storage unit 55, and a communication setting information storage unit 56. The storage content of the storage unit 50 will be described below with reference to FIGS. 3 to 9B. FIGS. 3 to 9B are views illustrating the storage contents of the storage units 50 of the relay servers 1, 2, and 3.

The relay group information storage unit 51 stores relay group information, which indicates a relay group and a relay server constituting the relay group.

As illustrated in FIG. 3, a group tag that is a parent element and a site tag that is a child element of the group tag are described in the relay group information. Group information 511 on the relay group is described in the group tag. The group information 511 includes identification information ("id") on the relay group, a last update time ("lastmod"), and a name ("name") of the relay group. Group configuration information 512 on the relay server constituting the relay group is described in the site tag. Identification information ("id") on the relay server is described in the group configuration information 512. The relay group can additionally be produced. In this case, unique identification information different from that of other relay groups is provided to the new relay group. Therefore, a setting such that data is exchanged only within a specific relay group can be performed.

The relay group information is shared by the relay servers 1, 2, and 3 constituting the relay group. In the case where a certain relay server performs processing of changing the relay group, the fact that the change of the relay group is changed is transmitted to other relay server(s), and the relay group information is updated. Thus, the relay group information is dynamically shared.

The relay server information storage unit 52 stores relay server information indicating outlines of a relay server, which conducts relay communication, and a client terminal, which belongs to the relay server.

A site tag, which is a parent element and described with respect to each relay server, and a node tag that is a child element of the site tag are described in the relay server information illustrated in FIG. 4. Server information 521 on the relay server 1 is described in the site tag. The server information 521 includes the identification information ("id") on the relay server, a name ("name") of the relay server, and start-up information ("stat"). If the content of "stat" is "active", it indicates that the relay server is logged into the relay communication system 100, and if the content of "stat" is blank, it indicates that the relay server is logged off. Belonging information 522 indicating the client terminal belonging to the relay server is described in the node tag that is the child element of the site tag. The belonging information 522 includes a name ("group") of the relay group to which the relay server belongs, identification information ("id") on the client terminal, a name ("name") of the client terminal, and identification information ("site") on the relay server to which the client terminal belongs. The identification information "site" is blank when the client terminal is not logged into the relay communication system 100.

The relay group conducts communication in the following manner based on the relay group information and the relay server information. For example, in the case where the client terminal 13 transmits the packet to the client terminal 22, the client terminal 13 transmits the packet to the relay server 1, which is the relay server to which the client terminal 13 is connected. The relay server, with which the packet exchange can be conducted, can be recognized based on the relay group information, and the identification information on the client terminal belonging to the relay server and enable/disable of the connection of the client terminal can be recognized based on the relay server information. Based on the pieces of information, the relay server 1 transfers the packet to the relay server 2, to which the client terminal 22 is connected. The relay server 2 that receives the packet transfers the packet to the client terminal 22. Therefore, the client terminals 13 and 22 can conduct relay communication with each other.

Similarly to the relay group information, the relay server information is shared by the relay servers 1, 2, and 3 constituting the relay group. In the case where a certain relay server performs the processing of changing the relay server information, the fact that the relay server information is changed is transmitted to other relay server(s), and the relay server information is updated. Thus, the relay server information is dynamically shared.

The client terminal information storage unit 53 stores client terminal information that is the detailed information on the client terminal. The relay servers 1, 2, and 3 store only the client terminal information on the client terminal belonging to each of own relay servers 1, 2, and 3. Because the client terminal 34 belongs to the relay server 3, only the client terminal information on the client terminal 34 is stored in the client terminal information storage unit 53 of the relay server 3.

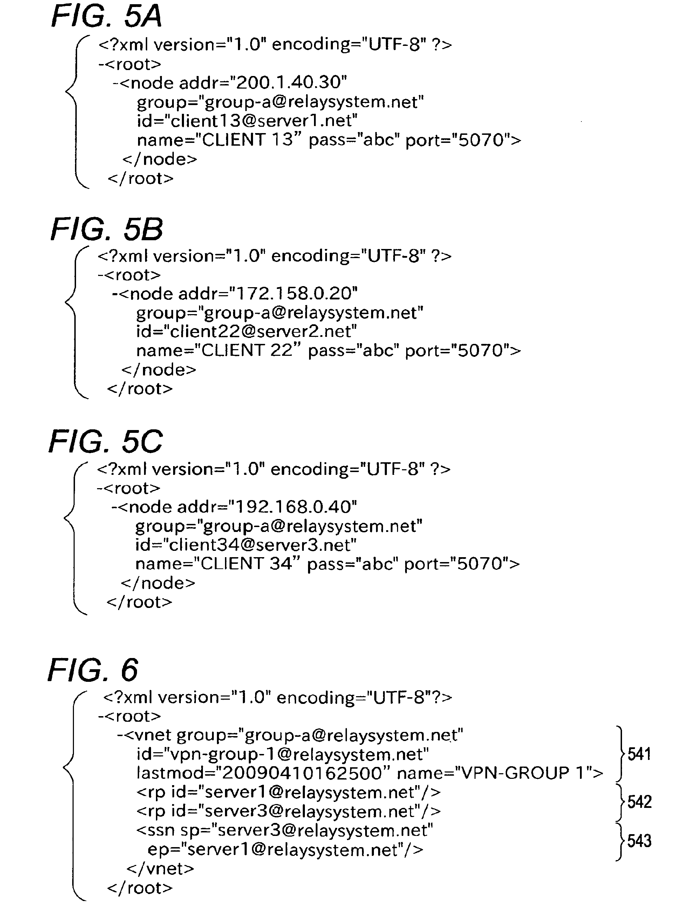

FIG. 5C illustrates the client terminal information stored in the client terminal information storage unit 53 of the relay server 3. Similarly, FIG. 5A illustrates the client terminal information stored in the relay server 1, and FIG. 5B illustrates client terminal information stored in the relay server 2.

The node tag is described in the client terminal information illustrated in FIGS. 5A to 5C. A private IP address ("addr") of the client terminal, a name ("group") of the relay group to which the relay server belongs, the identification information ("id"), the name ("name"), a password ("pass") used to log in the relay server, and port information ("port") are described in the node tag.

The VPN group information storage unit 54 stores VPN group information. The VPN group information is information on a VPN group (communication group) including the relay servers constituting the relay group and a device (hereinafter referred to as a routing device) that is selected as a routing point from the client terminals. The routing devices belonging to the same VPN group establish a routing session, which allows the communication using the VPN to be started.

A vnet tag is described in the VPN group information illustrated in FIG. 6. VPN group basic information 541, routing point information 542, and routing session information 543 are described in the vnet tag. The name ("group") of the relay group to which the VPN group belongs, identification information ("id") on the VPN group, the last update time ("lastmod"), and a name ("name") of the VPN group are described in the VPN group basic information 541. The identification information on the routing device that performs routing during the communication between the VPN groups is described in the routing point information 542. In the example in FIG. 6, the relay server 1 and the relay server 3 are described as the routing device. The routing devices connected to each other in the VPN group are described in the routing session information 543. In the routing session information 543, the routing devices are defined by being divided into a side ("sp (start point)") that initially performs communication control and a side "ep (end point) " that receives the communication control in routing session establishing processing of establishing the VPN to start the communication in the VPN group. In the following description, the routing device on the side that initially performs the communication control in order to establish the routing session is occasionally referred to as a "starting point", and the routing device that receives the communication control is occasionally referred to as an "ending point".

It can be seen from the VPN group information illustrated in FIG. 6 that the VPN group (VPN-GROUP-1) is configured by the relay server 1 and the relay server 3. It can be also seen that, at the start of the VPN group, the relay server 3 performs the communication control for the relay server 1 in order to establish the routing session.

Similarly to the relay server information and the relay group information, the VPN group information is shared by the relay servers 1 and 3 belonging to the same VPN group. In the case where a certain relay server performs processing of changing the VPN group information, the fact that the VPN group information is changed is transmitted to other relay server(s) belonging to the same VPN group, and the VPN group information is updated. Accordingly, the VPN group information is dynamically shared. A process of producing the VPN group will be described later.

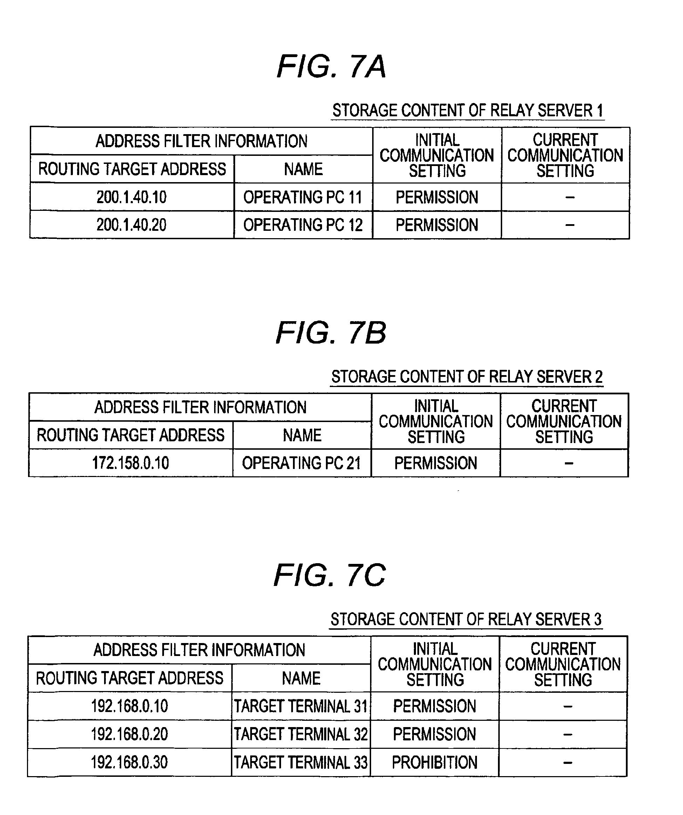

The address filter information storage unit 55 stores address filter information, which is used when performing routing control of the packet using the VPN. Before the VPN is constructed, the address filter information storage unit 55 stores information (address filter information on the relay server 3) indicating a device (routing target device) to which the relay server 3 can directly transmit the packet (see FIG. 7C). The address filter information includes an address (routing target address) of the routing target device and a name of the routing target device.

In an example illustrated in FIG. 7C, there is described that the device to which the relay server 3 can directly transmit the packet is the target terminals 31, 32, and 33. FIG. 7A illustrates the address filter information previously registered in the relay server 1, and FIG. 7B illustrates the address filter information previously registered in the relay server 2.

The communication setting information storage unit 56 stores communication setting information including an initial communication setting and a current communication setting. As illustrated in Fig. 7C, the communication setting information storage unit 56 stores the initial communication setting and the current communication setting while correlating the initial communication setting and the current communication setting with the routing target address. The initial communication setting is information that indicates an initial setting of permission/prohibition of the relay communication in which the routing target address is set to the destination. The current communication setting is information that indicates a current setting of the permission/prohibition of the relay communication, in which the routing target address is set to the destination, after the communication using the VPN is started. Accordingly, before the communication using the VPN is started, the current communication setting is not registered as illustrated in FIG. 7C.

In the description in FIG. 7C, the target terminal 31 and the target terminal 32 are set to "permission" in the initial communication settings, and the target terminal 33 is set to "prohibition" in the initial communication setting. Accordingly, in the case where the relay server 3 establishes the routing session with the relay server 1, the side of the LAN 10 cannot access the target terminal 33 unless the current communication setting is changed.

Processing in which the address filter information and the initial communication setting are used will be described below. As described above, only the address filter information illustrated in FIG. 7C is stored in the address filter information storage unit 55 of the relay server 3 before the VPN is constructed. For example, when establishing the routing session with the relay server 1, the relay server 3 transmits to the relay server 1 only the routing target address, which is set to "permission" in the initial communication setting, in the address filter information (FIG. 7C) previously registered in the own relay server 3, and the relay server 3 receives the address filter information (FIG. 7A) from the relay server 1. The relay server 3 stores the address filter information on the relay server 1 in the address filter information storage unit 55 while correlating the address filter information on the relay server 1 with the identification information on the relay server 1.

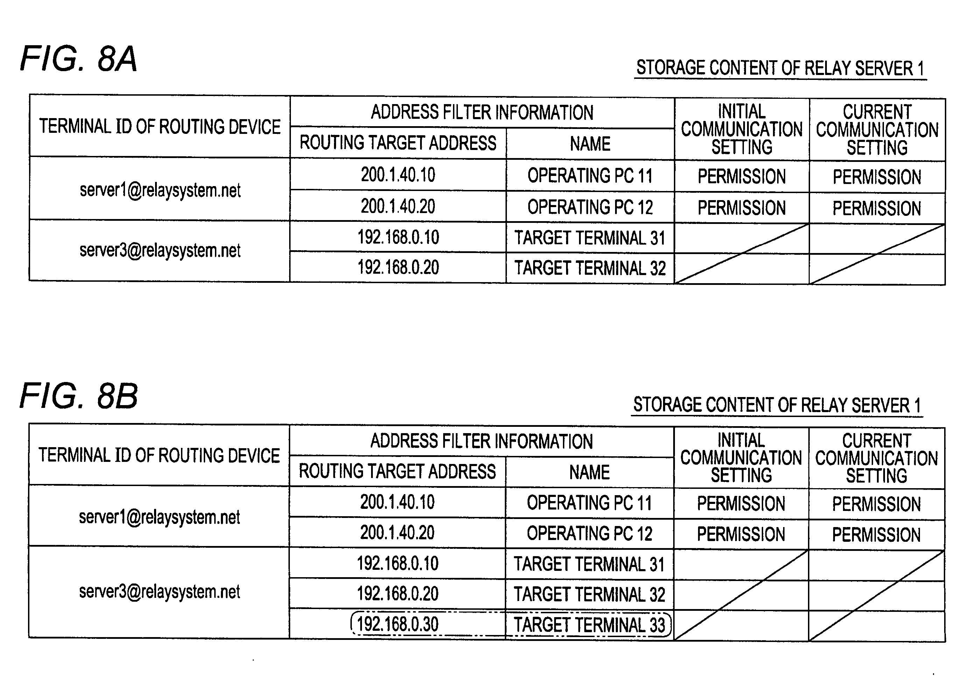

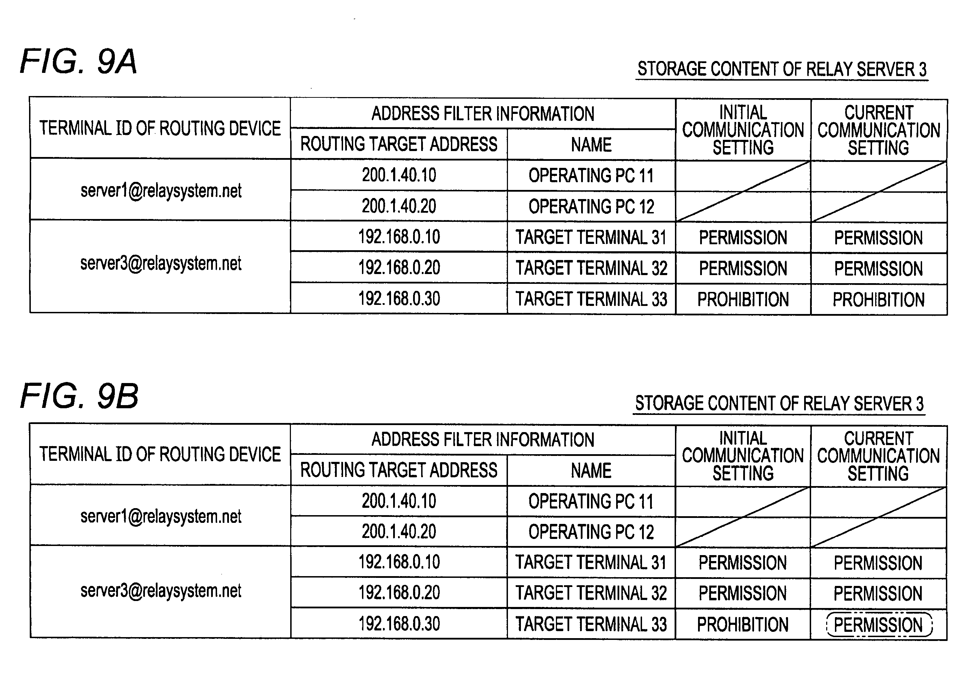

Therefore, a content in FIG. 9A is stored in the relay server 3. A content in FIG. 8A is stored in the relay server 1. Because the relay server 3 does not transmit the address of the target terminal 33 to the relay server 1, the target terminal 33 is not registered in the relay server 1 as illustrated in FIG. 8A. Accordingly, the side of the LAN 10 cannot access the target terminal 33. Hereinafter, a routing target address included in the address filter information on the relay server 3 may be referred to as a first routing target address, and a routing target address included in the address filter information on the relay server 1 may be referred to as a second routing target address.

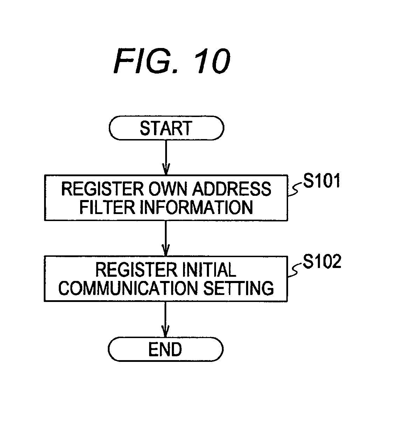

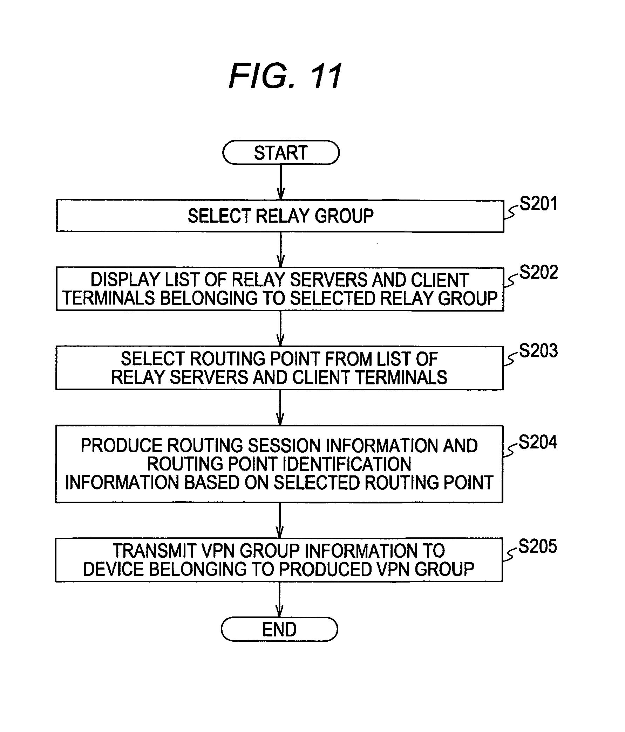

Next, a preparation for the communication using the VPN will be described. First, a setting previously performed to the relay server will be described with reference to FIG. 10, and then a flow of processing of producing the VPN group will be described with reference to FIG. 11. FIG. 10 is a flowchart illustrating the setting previously performed to the relay server 3. FIG. 11 is a flowchart illustrating the processing of producing the VPN group. Although the setting performed to the relay server 3 and the processing performed by the relay server 3 will be described below by way of example, the similar setting is previously performed to the relay servers 1 and 2, and the relay servers 1 and 2 can perform the similar processing.

The address filter information on the relay server 3 is registered (S101) as the setting previously performed to the relay server 3. This registration by a user who uses the relay communication system 100 is performed by inputting the address (the first routing target address) and the name of the device assigned as the routing target device by a predetermined method. In this case, it is assumed that the user inputs the addresses and the names of the target terminals 31, 32, and 33. The address filter information registered herein is stored in the address filter information storage unit 55.

Then, the user registers the initial communication setting (S102). The user performs the registration of "prohibition" for the terminal(s), which other LANs are usually not allowed to access, among routing target devices, and performs the registration of "permission" for other terminals. In the present embodiment, it is assumed that "prohibition" of the target terminal 33 is registered while "permission" of the target terminals 31 and 32 are registered. The registered initial communication setting is stored in the communication setting information storage unit 56.

The flow of the processing of producing the VPN group will be described below. First, the user can display a setting screen of the VPN group by operating the client terminals 13, 22, and 34. Herein, the case where the setting is performed with the client terminal 34 will be described. A plurality of relay groups to which the client terminal 34 belongs are displayed on the setting screen displayed on the client terminal 34. From the plurality of relay groups, the user selects the relay group in which the VPN group should be constructed (S201).

When the relay group is selected, a list of pieces of identification information on the relay servers and the client terminals, which belong to the selected relay group and can act as the routing point, are displayed on the screen of the client terminal 34 (S202). The user selects the relay server and the client terminal, which act as the routing point in the VPN group to be constructed (S203). In this description, it is assumed that the user selects the relay servers 1 and 3.

The identification information on the routing point and the routing session information on the routing point are produced based on the identification information on the selected relay server (S204). The identification information on the VPN group is added to the pieces of information to produce the VPN group information illustrated in FIG. 6. The client terminal 34 transmits the VPN group information to the relay servers 1 and 3 belonging to the same VPN group (S205). Each of the relay servers 1 and 3 stores the received VPN group information in the VPN group information storage unit 54. In this manner, the processing of constructing the VPN group is completed.

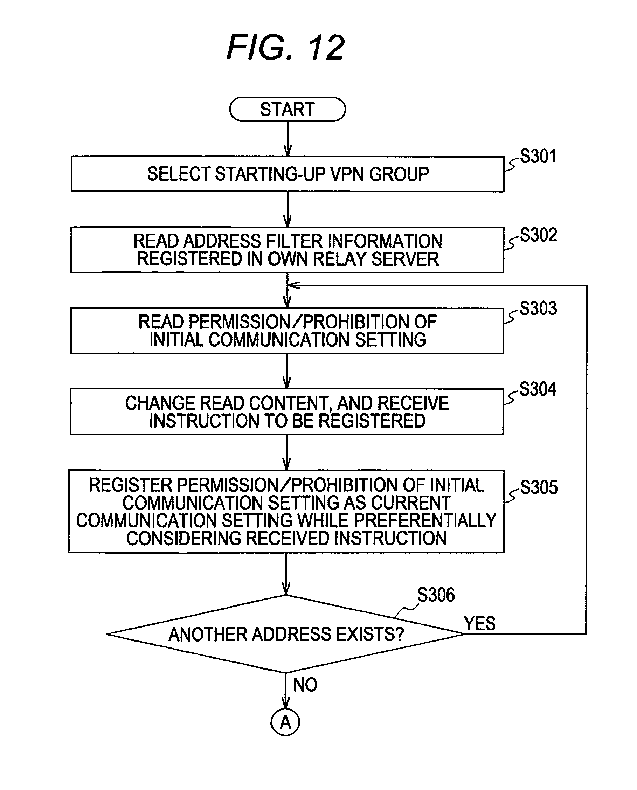

A flow until the communication is started in the constructed VPN group will be described below with reference to FIGS. 12 to 14. FIGS. 12 to 14 each illustrate a flowchart illustrating processing, which is performed until the communication using the VPN is started.

The user can display the constructed VPN groups on the screen by operating the client terminal 13 or the operating PC 11. The appropriate VPN group is selected from the displayed VPN groups (S301) to enable the processing of constructing the VPN. In this description, there will be described an example in which the relay server 3 performs processing of starting the produced VPN group (the VPN group configured by the relay servers 1 and 3).

The relay server 3 reads the address filter information correlated with the own relay server 3 (S302). The relay server 3 then selects one first routing target address from the list of first routing target addresses constituting the address filter information, and reads the initial communication setting corresponding to the selected routing target address (S303). Then the relay server receives an instruction in which a setting different from the content of the read initial communication setting is exceptionally (temporarily) performed (S304). For example, in the case where the communication is conducted in a setting (a one-off setting) different from the initial communication setting due to necessity of maintenance work or the like, the user can issue an instruction to change the content registered as the current communication setting from the initial communication setting by performing a predetermined operation to the relay server 3. Then, the relay server 3 registers the content of the read initial communication setting as the current communication setting while preferentially considering the instruction received in S304 (S305). Specifically, the permission/prohibition is registered as the current communication setting when the change instruction is received in S304, and the content of the initial communication setting is registered as the current communication setting when the change instruction is not received in S304. Then, the relay server 3 performs the pieces of processing in S304 and S305 to other first routing target addresses described in the list of the first routing target addresses. As described above, the initial communication settings are read for the target terminals 31, 32, and 33, and registered as the current communication setting. The relay server 3 may not receive the instruction to change and register the content of the initial communication setting (S304), but may perform the processing in S305 by simply using the initial communication setting stored in the communication setting information storage unit 56.

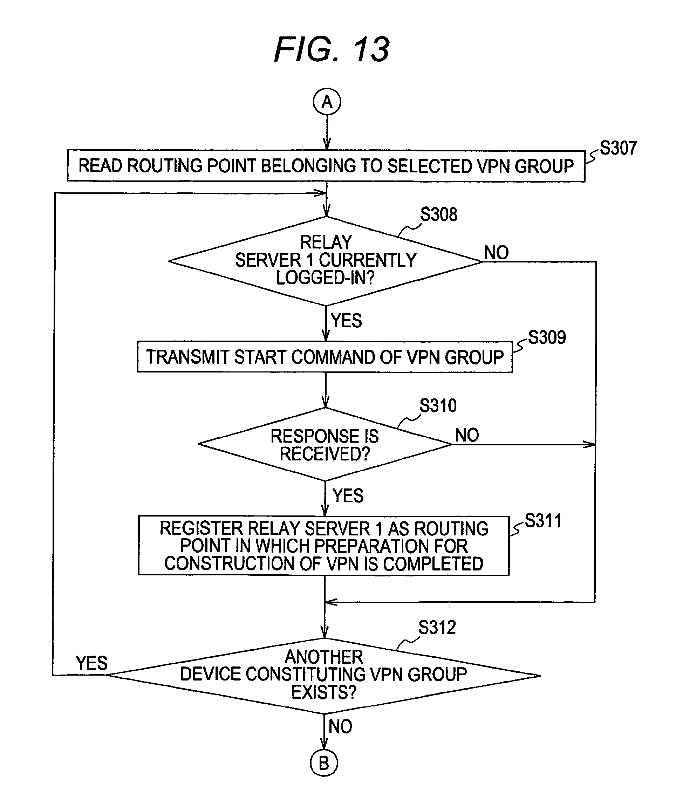

Next, the relay server 3 reads a routing point belonging to the selected VPN group (S307 in FIG. 13). Therefore, the relay server 1 is read out based on the content of the VPN group information illustrated in FIG. 6. Based on the relay server information, the relay server 3 determines whether the relay server 1 is currently logged into the relay communication system 100 (whether "stat" is active or blank) (S308). According to the relay server information illustrated in FIG. 4, the relay server 1 is currently logged into the relay communication system 100. Therefore, the relay server 3 transmits a command to start the VPN group to the relay server 1 together with the identification information on the VPN group (S309).

When receiving a response to the starting command from the relay server 1 (S310), the relay server 3 registers the relay server 1 as the routing point in which the preparation for the construction of the VPN is completed (S311).

Next, the relay server 3 determines whether another device belonging to the same VPN group exists (S312). Since the currently-produced VPN group is configured only by the relay servers 1 and 3, another device does not exist. If another device exists, the relay server 3 performs the pieces of processing in S308 to S311 for another device.

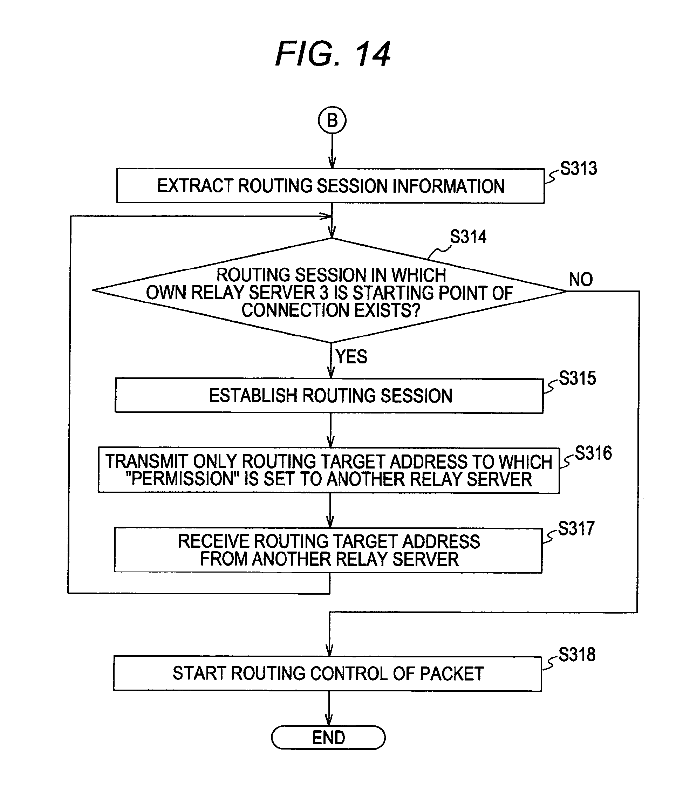

Next, the relay server 3 extracts the routing session information from the storage content of the VPN group information storage unit 54 (S313 in FIG. 14). The relay server 3 refers to the extracted routing session information to determine whether the routing session in which the own relay server 3 becomes the starting point is described (S314). The routing session information in FIG. 6 describes that the relay server 3 becomes the starting point in the routing session that should be established between the relay server 1 and the relay server 3.

Therefore, the relay server 3 performs predetermined communication control for the relay server 1 to establish the routing session (S315). As described above, the address filter information is exchanged in performing the communication control. Specifically, the relay server 3 extracts only the routing target address to which "permission" is set in the current communication setting, and the relay server 3 transmits the extracted routing target address to the relay server 1 (S316). The relay server 3 receives the routing target address from the relay server 1, and stores the routing target address in the address filter information storage unit 55 (S317). In FIG. 7A, in the current communication setting, "permission" is set to the routing target address received by the relay server 3. Accordingly, the relay server 3 receives the routing target addresses of both the operating PCs 11 and 12 from the relay server 1.

At this point, the content of the current communication setting is coincident with the content of the initial communication setting unless the exceptional setting instruction described in S304 exists (see S305). Accordingly, it can be said that the address (the routing target address to which "permission" is set in the current communication setting) extracted in S316 is substantially the routing target address to which "permission" is set in the initial communication setting.

Thus, the content in FIG. 9A is stored in the address filter information storage unit 55 of the relay server 3. The content in FIG. 8A is stored in the address filter information storage unit 55 of the relay server 1.

As described above, in the present embodiment, because the routing devices exchange the pieces of address filter information with each other (acquire the pieces of address filter information from each other) in constructing the VPN, the VPN can be constructed using the latest address filter information. Even if the pieces of address filter information are changed in some routing devices before the start of the VPN, the VPN is constructed while the change is reflected in all the routing devices, and the communication is started. Therefore, generation of a contradiction can be prevented in the packet routing, and reliability can be improved.

The relay server 3 then performs the processing in S314 again. Since the currently-produced VPN group is configured only by the relay servers 1 and 3, another routing session is not described in the VPN group information. Accordingly, the relay server 3 starts the routing control of the packet (S318). In the case where another routing session exists, the relay server 3 performs the pieces of processing in S315 to S317 again.

Although not illustrated in the flowchart in FIG. 14, even if the routing session in which the own relay server 3 becomes the starting point of connection does not exist in S310 (in the case where the own relay server 3 becomes the ending point of the routing), the processing of establishing the routing session and the exchange of the address filter information are performed under the communication control of the routing device that becomes the starting point.

Each routing device does not perform the initial communication control in order to establish the routing session unless the description in which the own routing device is the starting point exists in the routing session information. Therefore, collision of the communication control can be prevented, and the routing session between the devices can be established by the simple control.

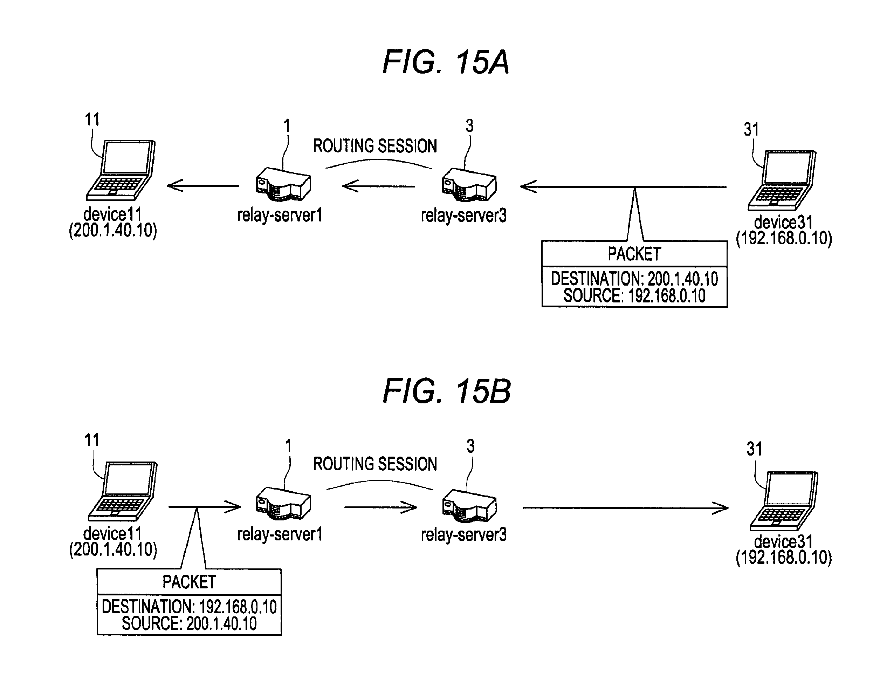

Next, processing of performing the packet routing using the established routing session will be described with reference to FIGS. 15A and 15B or the like. FIGS. 15A and 15B are explanatory views illustrating the routing control.

First, a flow of the case where the target terminal 31 transmits the packet to the operating PC 11 will be described. As illustrated in FIG. 15A, the target terminal 31 assigns an address (200.1.40.10) of the operating PC 11 as a destination address, and assigns an address (192.168.0.10) of the own target terminal 31 as a source address. The relay server 3 that receives the packet compares the destination address of the packet to the stored address filter information (FIG. 9A). The relay server 3 recognizes that the destination address is correlated with the relay server 1, and transfers the packet to the relay server 1 through the routing session.

The relay server 1 that receives the packet compares the destination address of the packet to the stored address filter information (FIG. 8A). The relay server 1 recognizes that the destination address is correlated with the own relay server 1, and transfers the packet to the operating PC 11.

Next, a flow of the case where the operating PC 11 transmits the packet to the target terminal 31 will be described. As illustrated in FIG. 15B, the operating PC 11 assigns the address (192.168.0.10) of the target terminal 31 as the destination address, and assigns the address (200.1.40.10) of the own operating PC 11 as the source address. The relay server 1 that receives the packet compares the destination address of the received packet to the stored address filter information (FIG. 8A). The relay server 1 recognizes that the destination address is correlated with the relay server 3, and transfers the packet to the relay server 3 through the routing session.

The relay server 3 that receives the packet compares the destination address of the received packet to the stored address filter information (FIG. 9A). The relay server 3 recognizes that the destination address is correlated with the own relay server 3, and transfers the packet to the target terminal 31.

The routing control in which the address filter information is used is performed in the above manner. Accordingly, even if the operating PC 11 transmits the packet to the target terminal 33, the relay server 1 discards the packet because the address of the target terminal 33 is not described in the address filter information. That is, in the present embodiment, the communication using the VPN can be started while the operating PCs 11 and 12 are prohibited from accessing the target terminal 33.

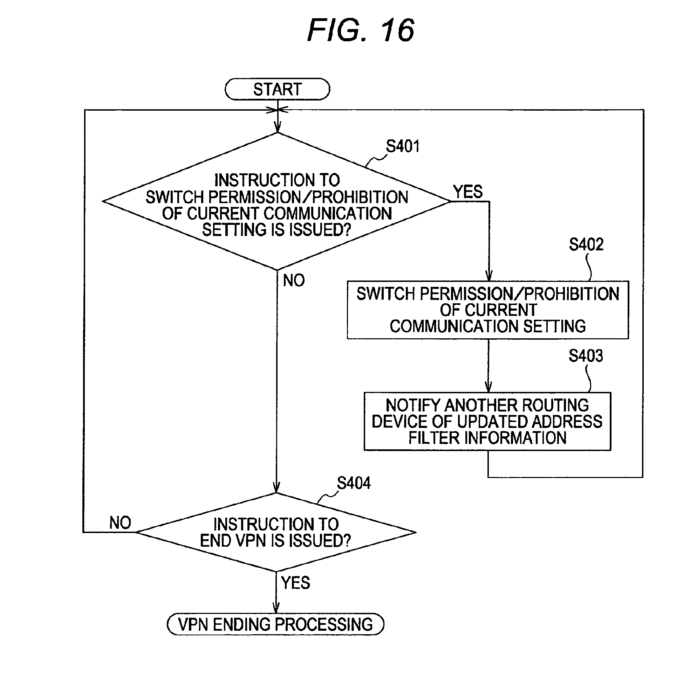

Processing, which is performed by the relay server 3 when the current communication setting is switched after the start of the communication, will be described below with reference to FIG. 16. FIG. 16 is a flowchart illustrating the processing when the permission/prohibition of the current communication setting is switched.

The following describes a case where the current communication setting of the target terminal 33 is switched from "prohibition" to "permission". After the construction of the VPN, the relay server 3 monitors whether an instruction to switch the current communication setting is issued (S401). When the user issues the instruction to switch the current communication setting of the target terminal 33, the relay server 3 switches the current communication setting in response to the instruction (see S402 and FIG. 9B). Accordingly, the current communication setting stored in the relay server 3 is updated as illustrated in FIG. 9B (see a chain-line portion). When the user issues the instruction, the relay server 3 switches the current communication setting of the target terminal 33 from "permission" to "prohibition".

Next, the relay server 3 transmits the post-update address filter information to other routing devices (in this description, the relay server 1) constituting the VPN group (S403). At this point, the relay server 3 may transmit only the changed portion of the address filter information to the relay server 1, or transmit the whole address filter information to the relay server 1.

In response to the notification from the relay server 3, the relay server 1 updates the address filter information, which is stored while correlated with the relay server 3. Accordingly, the address filter information stored in the relay server 1 is updated as illustrated in FIG. 8B (see the chain-line portion). Therefore, the operating PCs 11 and 12 can access the target terminal 33.

In addition to presence or absence of the instruction to switch the current communication setting, the relay server 3 monitors whether the user issues an instruction to end the VPN (S404). When the user issues the instruction to end the VPN, the relay server 3 transmits the end of the VPN to other routing devices (in this description, the relay server 1), and ends the VPN.

As described above, in the present embodiment, every time the VPN is constructed, the relay server 3 registers the content of the initial communication setting as the current communication setting in S305 unless the exceptional setting instruction is issued in S304. Accordingly, even if "permission" is set in the current communication setting of the target terminal 33 before the VPN is ended, the current communication setting of the target terminal 33 forcedly returns to "prohibition" set in the initial communication setting in principle, when the VPN is reconstructed. Therefore, the unintended setting of "permission" is prevented in the communication with the target terminal 33, so that the security can be improved.

As described above, the relay server 3 of the present embodiment includes the address filter information storage unit 55, the communication setting information storage unit 56, and the controller 60. The address filter information storage unit 55 is located in the LAN 30, and stores the first routing target address to which the relay server 3 can transfer the packet and the second routing target address to which the relay server 1 located in the LAN 10 can transfer the packet. The communication setting information storage unit 56 stores the initial communication setting indicating the initial setting of the permission/prohibition of the relay communication and the current communication setting indicating the current setting. The controller 60 extracts the first routing target address that is permitted in the initial communication setting, transmits the extracted first routing target address to the relay server 1, and receives the second routing target address from the relay server 1 to establish the routing session with the relay server 1. The controller 60 registers the content of the initial communication setting as the current communication setting. When receiving the packet addressed to the second routing target device from the first routing target device, the controller 60 transfers the packet to the relay server 1 through the routing session. When receiving the packet addressed to the first routing target device from the routing session, the controller 60 transfers the packet to the first routing target device of the destination address.

When "prohibition" is set in the initial communication setting of the target terminal 33, the communication using the VPN can be started while the access to the target terminal 33 is prohibited. Accordingly, it is not necessary for the user to manually change the setting after the start of the communication (except when the access to the target terminal 33 should exceptionally be permitted), so that the user can save the trouble. A man-made mistake such that the user forgets the setting is not generated, so that the security can be improved.

When the current communication setting is switched after the establishment of the routing session, the relay server 3 of the present embodiment transmits the post-switching content to the relay server 1.

The relay server 1 is thereby notified that the permission/prohibition of the communication is switched, so that the relay communication can be conducted while the changed content is reflected.

In the relay server 3 of the present embodiment, even if the current communication setting is changed after the establishment of the routing session, the controller 60 returns the current communication setting to the initial communication setting when the routing session is reconstructed.

Therefore, the unintended setting of "permission" is prevented in the communication with the target terminal 33 having the setting in which the access is not usually accepted, so that the security can be improved.

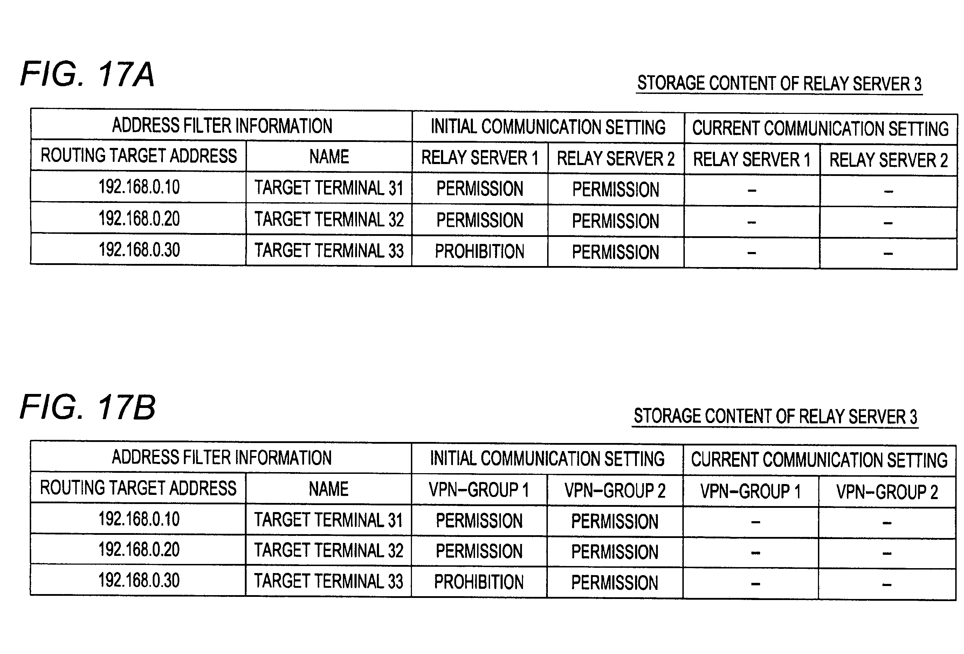

A modification of the above embodiment will be described below with reference to FIG. 17. FIG. 17 is a view illustrating contents of address filter information and communication setting information according to a modification.

In the present modification, a settable item is improved while the configuration of the above embodiment is adopted. Specifically, in the present modification, the initial communication setting can be set with respect to each relay server that is the other side of the construction of the VPN.

For example, the setting can be determined based on the site where the relay server is installed. For example, it is assumed that a company in which the relay server 3 is installed is different from a company in which the relay server 1 is installed, and that the company in which the relay server 3 is installed is the same a company in which the relay server 2 is installed. In this case, from the viewpoint of security, a problem is possibly generated when the communication with the target terminal 33 is always received from the relay server 1. On the other hand, the security problem is hardly generated when the communication with the target terminal 33 is always received from the relay server 2. In this case, as illustrated in FIG. 17A, the target terminal 33 is prohibited from accessing the relay server 1 in the initial communication setting, and is permitted to access the relay server 2 in the initial communication setting, allowing the construction of the VPN equivalent to the above description.

In addition to the configuration in which the initial communication setting is switched with respect to each relay server, for example, the initial communication setting may be switched with respect to each VPN group. For example, it is conceivable that "permission" is set to the VPN group configured by the same company in the initial communication setting, and that "prohibition" is set to the VPN group configured by a plurality of companies in the initial communication setting. Specifically, it is assumed that the relay servers belonging to a VPN-group 1 are installed in the plurality of companies while the relay servers belonging to a VPN-group 2 are installed in one company. From the viewpoint of security, the problem possibly occurs when the communication with the target terminal 33 is always received in the VPN-group 1. On the other hand, the security problem hardly occurs when the communication with the target terminal 33 is always received in the VPN-group 2. In this case, as illustrated in FIG. 17B, the target terminal 33 is prohibited from accessing the relay servers in the VPN-group 1 in the initial communication setting, and the target terminal 33 is permitted to access the relay servers in the VPN-group 2 in the initial communication setting, allowing the construction of the VPN equivalent the above description.

Although the preferred embodiment of the present invention and the modification are described above, for example, the above configurations can be changed as follows.

In the above embodiment, the special instruction in which the setting different from the content of the read initial communication setting is received every time the routing target address is registered (S304). Alternatively, at first, the initial communication settings of all the routing target addresses may be directly copied to the current communication settings, and then the special instruction may collectively be received after the contents of the current communication settings of all the routing target addresses are displayed in the list format.

In the above embodiment, at the stage at which the communication is started, the relay server copies the content of the initial communication setting into the current communication setting (S303 to S306), and whether the routing target address is transmitted to another relay server is determined based on the content of the current communication setting (S316). Alternatively, the relay server may determine whether the routing target address is transmitted to another relay server based on the content of the initial communication setting, and then the content of the initial communication setting may be registered as the current communication setting. However, also in this case, it is needless to say that the special instruction should be considered when the user issues the special instruction in the S304.

In the above embodiment, the address filter information is exchanged at substantially the same time as the establishment of the routing session. Alternatively, the address filter information may be transmitted while the instruction to start the VPN group is transmitted (S309), and the address filter information may be received while the response is received (S310).

In the above embodiment, the individual device, such as the operating PC 11, constitutes the routing target device. Alternatively, for example, the whole LAN 10 (200.1.40.0/24) may be set as the routing target device of the relay server 1.

In the above embodiment, only the relay server acts as the routing point. Alternatively, the client terminal may act as the routing point. The number of routing points is not limited to two in the VPN group, but at least three routing points may be provided. One routing device may belong to a plurality of VPN groups.

The format in which the relay group information, the relay server information, the client terminal information, the VPN group information, and the address filter information are stored is not limited to the XML format, but each piece of information may be stored in an appropriate format.

Instead of the configuration of the above embodiment, an external server used in the communication between the relay servers is installed on the Internet, and the function of the external server may be exerted as an SIP (Session Initiation Protocol) server to conduct the communication.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the scope of the present invention as defined by the appended claims.

## Claims

1. A first relay server (3) **characterized by** comprising:
an address filter information storage unit (55) that is adapted to store a first routing target address and a second routing target address, the first routing target address being an address of a first routing target device (31, 32, 33), to which a packet is transferred, located in a first LAN (30), the second routing target address being an address of a second routing target device (11, 12) to which a packet is transferred by a second relay server (1) located in a second LAN (10);
a communication setting information storage unit (56) that stores an initial communication setting indicating an initial setting of a prohibition for the first routing target device (33) registered in the address filter information storage unit (55) in case the second LAN (10) is not allowed to access the first routing target device (31), and a permission for the first routing target device (31, 32) registered in the address filter information storage unit (55) in case the second LAN (10) is allowed to access the first routing target device (31, 32); and
a controller (60), wherein
the controller (60) is adapted to perform
control to extract the first routing target address for the first routing target device (31, 32) in case the initial communication setting indicates an initial setting of permission to transmit the extracted first routing target address to the second relay server (1) and receive the second routing target address from the second relay server (1), to establish a routing session with the second relay server (1),
control to transfer, when a packet addressed to the second routing target device (11, 12) is received from the first routing target device (31, 32), the packet to the second relay server (1) through the routing session, and
control to transfer, when a packet addressed to the first routing target address is received from the routing session, the packet to the first routing target device (31, 32) of a destination.

2. The first relay server (3) according to claim 1, wherein the communication setting information storage unit (56) is adapted to further store a current communication setting indicating a current setting, and
the controller (60) is further adapted to perform
control to register a content of the initial communication setting as the current communication setting when no instruction is received which indicates that a setting different from the content of the initial communication setting is performed.

3. The first relay server according to claim 2, **characterized in that**
when the current communication setting of the first routing target device (31, 32) is switched after the routing session is established, an updated content of the current communication setting is transmitted to the second relay server (1).

4. The first relay server according to claim 2 or 3, **characterized in that** the communication setting information storage unit (56) is adapted to store different initial communication settings with respect to each relay server (1, 3).

5. The first relay server according to any one of claims 2 to 4, **characterized in that**
when a group in which relay servers belonging to an identical group including a plurality of relay servers (1, 3) establish a routing session with each other to conduct communication is referred to as a communication group,
the communication setting information storage unit (56) stores different initial communication settings with respect to each communication group.

6. The first relay server according to any one of claims 2 to 5, **characterized in that**
even when the current communication setting is changed after the routing session is established, the controller (60) is adapted to return the current communication setting to the initial communication setting when the routing session is established again.

7. A relay communication system **characterized by** comprising:
a first relay server (3) according to claim 2 and the second relay server, wherein
the first relay server (3) is located in the first LAN (30), wherein the first routing target address is an address of the first routing target device to which a packet is transferred by the first relay server (3) located in the first LAN (30).

## Patentansprüche

1. Ein erster Relaisserver (3), **dadurch gekennzeichnet, dass** dieser folgende Merkmale aufweist:
eine Adressfilterinformationsspeicherungseinheit (55), die angepasst ist, um eine erste Routingzieladresse und eine zweite Routingzieladresse zu speichern, wobei die erste Routingzieladresse eine Adresse einer ersten Routingzielvorrichtung (31, 32, 33) ist, zu der ein Paket übertragen wird, die in einem ersten LAN (30) angeordnet ist, wobei die zweite Routingzieladresse eine Adresse einer zweiten Routingzielvorrichtung (11, 12) ist, zu der ein Paket durch einen zweiten Relaisserver (1) übertragen wird, die in einem zweiten LAN (10) angeordnet ist;
eine Kommunikationseinstellungsinformationsspeicherungseinheit (56), die eine anfängliche Kommunikationseinstellung speichert, die eine anfängliche Einstellung eines Verbots für die erste Routingzielvorrichtung (33) anzeigt, registriert in der Adressfilterinformationsspeicherungseinheit (55), falls es dem zweiten LAN (10) nicht erlaubt ist, auf die erste Routingzielvorrichtung (31) zuzugreifen, und einer Erlaubnis für die erste Routingzielvorrichtung (31, 32), registriert in der Adressfilterinformationsspeicherungseinheit (55), falls es dem zweiten LAN (10) erlaubt ist, auf die erste Routingzielvorrichtung (31, 32) zuzugreifen; und
eine Steuerung (60), wobei
die Steuerung (60) angepasst ist, um Folgendes auszuführen:
Steuern des Extrahierens der ersten Routingzieladresse für die erste Routingzielvorrichtung (31, 32), falls die anfängliche Kommunikationseinstellung eine anfängliche Einstellung einer Erlaubnis anzeigt, die extrahierte erste Routingzieladresse zu dem zweiten Relaisserver (1) zu übertragen und die zweite Routingzieladresse von dem zweiten Relaisserver (1) zu empfangen, um eine Routing-Sitzung mit dem zweiten Relaisserver (1) einzurichten,
Steuern einer Übertragung des Pakets zu dem zweiten Relaisserver (1) durch die Routing-Sitzung, wenn ein Paket, das zu der zweiten Routingzielvorrichtung (11, 12) adressiert ist, von der ersten Routingzielvorrichtung (31, 32) empfangen wird, und
Steuern der Übertragung des Pakets zu der ersten Routingzielvorrichtung (31, 32) eines Zielorts, wenn ein Paket, das zu der ersten Routingzieladresse adressiert ist, von der Routing-Sitzung empfangen wird,.

2. Der erste Relaisserver (3) gemäß Anspruch 1, bei dem die Kommunikationseinstellungsinformationsspeicherungseinheit (56) angepasst ist, um ferner eine aktuelle Kommunikationseinstellung zu speichern, die eine aktuelle Einstellung anzeigt, und bei dem die Steuerung (60) ferner angepasst ist, Folgendes auszuführen:
Steuern der Registrierung eines Inhalts der anfänglichen Kommunikationseinstellung als die aktuelle Kommunikationseinstellung, wenn keine Anweisung empfangen wird, die anzeigt, dass eine Einstellung, die unterschiedlich zu dem Inhalt der anfänglichen Kommunikationseinstellung ist, ausgeführt wird.

3. Der erste Relaisserver gemäß Anspruch 2, **dadurch gekennzeichnet, dass**
wenn die aktuelle Kommunikationseinstellung der ersten Routingzielvorrichtung (31, 32) geschaltet wird, nachdem die Routing-Sitzung eingerichtet ist, ein aktualisierter Inhalt der aktuellen Kommunikationseinstellung zu dem zweiten Relaisserver (1) übertragen wird.

4. Der erste Relaisserver gemäß Anspruch 2 oder 3, **dadurch gekennzeichnet, dass** die Kommunikationseinstellungsinformationsspeicherungseinheit (56) angepasst ist, um unterschiedliche anfängliche Kommunikationseinstellungen im Hinblick auf jeden Relaisserver (1, 3) zu speichern.

5. Der erste Relaisserver gemäß einem der Ansprüche 2 bis 4, **dadurch gekennzeichnet, dass**
wenn eine Gruppe, in der Relaisserver, die zu einer identischen Gruppe gehören, die eine Mehrzahl von Relaisservern (1, 3) umfasst, eine Routing-Sitzung miteinander einrichten, um eine Kommunikation auszuführen, als eine Kommunikationsgruppe bezeichnet wird,
die Kommunikationseinstellungsinformationsspeicherungseinheit (56) unterschiedliche anfängliche Kommunikationseinstellungen im Hinblick auf jede Kommunikationsgruppe speichert.

6. Der erste Relaisserver gemäß einem der Ansprüche 2 bis 5, **dadurch gekennzeichnet, dass**
sogar wenn die aktuelle Kommunikationseinstellung geändert wird, nachdem die Routing-Sitzung eingerichtet ist, die Steuerung (60) angepasst ist, die aktuelle Kommunikationseinstellung in die anfänglichen Kommunikationseinstellung zurückzubringen, wenn die Routing-Sitzung wieder eingerichtet ist.

7. Ein Relaiskommunikationssystem, **dadurch gekennzeichnet, dass** es folgende Merkmale aufweist:
einen ersten Relaisserver (3) gemäß Anspruch 2 und den zweiten Relaisserver, wobei
der erste Relaisserver (3) in dem ersten LAN (30) angeordnet ist, wobei die erste Routingzieladresse eine Adresse der ersten Routingzielvorrichtung ist, zu der ein Paket durch den ersten Relaisserver (3) übertragen wird, die in dem ersten LAN (30) angeordnet ist.

## Revendications

1. Un premier serveur relais (3), **caractérisé par le fait qu'**il comprend:
une unité de mémorisation d'informations de filtre d'adresse (55) qui est adaptée pour mémoriser une première adresse cible de routage et une deuxième adresse cible de routage, la première adresse cible de routage étant une adresse d'un premier dispositif cible de routage (31, 32, 33) auquel est transféré un paquet, situé dans un premier réseau local (30), la deuxième adresse cible de routage étant une adresse d'un deuxième dispositif cible de routage (11, 12) auquel est transféré un paquet par un deuxième serveur relais (1) situé dans un deuxième réseau local (10);
une unité de mémorisation d'information de réglage de communication (56) qui mémorise un réglage de communication initial indiquant un réglage initial d'une interdiction pour le premier dispositif cible de routage (33) enregistré dans l'unité de mémorisation d'informations de filtre d'adresse (55) au cas où le deuxième réseau local (10) n'est pas autorisé à accéder au premier dispositif cible de routage (31), et une autorisation pour le premier dispositif cible de routage (31, 32) enregistré dans l'unité de mémorisation d'informations de filtre d'adresse (55) au cas où le deuxième réseau local (10) est autorisé à accéder au premier dispositif cible de routage (31, 32); et
un moyen de commande (60),
dans lequel
le moyen de commande (60) est adapté pour réaliser
une commande pour extraire la première adresse cible de routage pour le premier dispositif cible de routage (31, 32) au cas où le réglage de communication initial indique un réglage initial d'autorisation de transmettre la première adresse cible de routage extraite au deuxième serveur relais (1) et recevoir la deuxième adresse cible de routage du deuxième serveur relais (1), pour établir une session de routage avec le deuxième serveur relais (1),
une commande pour transférer, quand un paquet adressé au deuxième dispositif cible de routage (11, 12) est reçu du premier dispositif cible de routage (31, 32), le paquet au deuxième serveur relais (1) par la session de routage, et
une commande pour transférer, quand un paquet adressé à la première adresse cible de routage est reçu de la session de routage, le paquet au premier dispositif cible de routage (31, 32) d'une destination.

2. Premier serveur relais (3) selon la revendication 1, dans lequel l'unité de mémorisation d'information de réglage de communication (56) est adaptée par ailleurs pour mémoriser un réglage de communication actuel indiquant un réglage actuel, et
le moyen de commande (60) est adapté par ailleurs pour réaliser
une commande d'enregistrer un contenu du réglage de communication initial comme réglage de communication actuel lorsqu'il n'est pas reçu d'instruction qui indique qu'il est réalisé un réglage différent du contenu du réglage de communication initial.

3. Premier serveur relais selon la revendication 2, **caractérisé par le fait que**
lorsque le réglage de communication actuel du premier dispositif cible de routage (31, 32) est commuté après qu'est établie la session de routage, un contenu mis à jour du réglage de communication actuel est transmis au deuxième serveur relais (1).

4. Premier serveur relais selon la revendication 2 ou 3, **caractérisé par le fait que** l'unité de mémorisation d'information de réglage de communication (56) est adaptée pour mémoriser différents réglages de communication initiaux par rapport à chaque serveurs relais (1, 3).

5. Premier serveur relais selon l'une quelconque des revendications 2 à 4, **caractérisé par le fait que**
quand un groupe dans lequel les serveurs relais appartenant à un groupe identique comportant une pluralité de serveurs relais (1, 3) établissent une session de routage entre eux pour réaliser une communication est appelé groupe de communication,
l'unité de mémorisation d'information de réglage de communication (56) mémorise différents réglages de communication initiaux par rapport à chaque groupe de communication.

6. Premier serveur relais selon l'une quelconque des revendications 2 à 5, **caractérisé par le fait que**
même si le réglage de communication actuel est modifié après qu'est établie la session de routage, le moyen de commande (60) est adapté pour retourner le réglage de communication actuel au réglage de communication initial quand la session de routage est rétablie.

7. Système de communication à relais, **caractérisé par le fait qu'**il comprend:
un premier serveur relais (3) selon la revendication 2 et le deuxième serveur relais, dans lequel
le premier serveur relais (3) est situé dans le premier réseau local (30), où la première adresse cible de routage est une adresse du premier dispositif cible de routage auquel un paquet est transféré par le premier serveur relais (3) situé dans le premier réseau local (30).
